# EUROPÄISCHE PATENTANMELDUNG

(11) **EP 3 647 719 A1**
(43) Veröffentlichungstag der Anmeldung: **06.05.2020**
(21) Anmeldenummer: 19205979.8
(22) Anmeldetag: 29.10.2019
(51) Int. Cl.: G01C 9/26, B28D 1/22, B43L 7/00, G01B 3/04

(54) **VERWINDUNGSSTEIFER AUSSCHNITT FÜR WASSERWAAGE ODER RICHTSCHEIT**

(30) Priorität: 30.10.2018 DE 102018127122; 05.12.2018 DE 102018130991
(71) Anmelder: Bachsleitner, Georg, 91189 Rohr-Dechendorf (DE)
(72) Erfinder: Bachsleitner, Georg, 91189 Rohr-Dechendorf (DE)
(74) Vertreter: Götz, Gudrun Veronika

(57) **Zusammenfassung**

Verfahren zur Herstellung eines Grundkörpers, insbesondere eines Wasserwaagenkörpers (100), für eine Wasserwaage oder ein Richtscheit aus einem Vierkantrohr (110), aufweisend folgende Schritte:
- Bereitstellen eines länglichen Vierkantrohrs (110) mit vier Seitenwandungen (111, 112, 113, 114) und zwei Stirnseiten (118, 119),
- Fertigen einer oder mehrerer Ausnehmungen (120, 120a, 120b) in dem Vierkantrohr (110), wobei die eine oder die mehreren Ausnehmungen (120a, 120b) jeweils mindestens eine freie Kante (121) aufweisen,
- Ausbilden mindestens eines Versteifungsabschnitts (150) im Bereich der einen oder der mehreren Ausnehmungen (120, 120a, 120b) und/oder im Bereich der einen oder beider Stirnseiten (118, 119) mit mindestens einer Doppelwandung (151), wobei die Doppelwandung (151) durch Umbiegen und/oder Umknicken der mindestens einen freien Kante (121) um eine Biege- und/oder Knickachse (153), insbesondere ins Innere des Vierkantrohrs (110), ausgebildet wird.

## Beschreibung

Die Erfindung betrifft ein Verfahren zur Herstellung eines Grundkörpers, insbesondere eines Wasserwaagenkörpers, aus einem Vierkantrohr nach dem Oberbegriff des Anspruchs 1 und einen Grundkörper nach dem Oberbegriff des Anspruchs 10. Ferner betrifft die Erfindung eine Wasserwaage oder ein Richtscheit nach dem Oberbegriff des Anspruchs 14.

Wasserwaagen oder Richtscheite sind weit verbreitete Messgeräte. Insbesondere auf Baustellen sind Wasserwaagen oder Richtscheite im täglichen Gebrauch, wenn auch meist unbeabsichtigt, durch Stürze oder falsche Belastung einer starken mechanischen Beanspruchung ausgesetzt. Eine Variante einer Wasserwaage oder eines Richtscheits ist die Ausbildung mit einem Vierkantrohr aus Metall oder Aluminium, wobei mindestens eine Seitenwandung des Vierkantrohres die Auflagefläche oder Messfläche bildet, welche für die erforderliche Messgenauigkeit exakt eben sein muss. Infolge der mechanischen Beanspruchung kann sich die Messfläche verformen, womit die Wasserwaage oder das Richtscheit unbrauchbar wird und ausgetauscht werden muss. Von der Verformung ist insbesondere der Bereich der Längslibellen betroffen, da das Vierkantrohr zum Einsetzen der Libellen bereichsweise ausgeschnitten ist. Dieser Ausschnitt führt zu einer Materialschwächung und zu einer reduzierten Verwindungssteifigkeit bzw. Biegesteifigkeit der Wasserwaage im Bereich der Libelle. Ebenfalls betroffen von einer solchen Verformung sind Ausnehmungen für Griffaussparungen oder Griffmulden, insbesondere bei Richtscheiten.

Im Stand der Technik wird eine Verbesserung der Steifigkeit von Wasserwaagen typischerweise durch entsprechende Profilierung an der Außenseite und/oder der Innenseite des Vierkantrohres erreicht. Anstelle eines einfachen Vierkantrohres kann die Wasserwaage auch mit einem Rohr gefertigt sein, welches ein verwindungssteiferes H-Außenprofil oder Doppel-T- Außenprofil aufweist. Alternativ wird der Grundkörper der Wasserwaage mit faserverstärktem Material gefertigt.

Die EP 1 857 778 B1 betrifft eine Wasserwaage, bei der die Innenflächen des Rahmens Aluminiumrippen aufweisen, die mit einer Nase der Libellenhalterung in Eingriff gebracht werden können, sodass die Libellenhalterung relativ zu dem Rahmen in einer vertikalen Richtung verriegelt ist.

Die DE 20 2009 016 443 U1 beschreibt die Versteifung eines Wasserwaagen-Grundkörpers durch geeignete Materialwahl. Der Grundkörper besteht aus einem Holz-Kunststoff-Verbundmaterial. In einer Öffnung ist ein Libellenhalter angeordnet. Die Libelle selbst ist mittels Kleben oder Schweißen in der Verbindungsschicht am Libellenhalter befestigt. Durch die Holzfasern im Werkstoff kann eine hohe Festigkeit und Steifigkeit bei gleichzeitig geringem Gewicht realisiert werden.

Die WO 2005/088 256 A1 zeigt eine Wasserwaage, welche durch Spritzgießen mit thermoplastischem Material hergestellt ist. Der Wasserwaagenkörper weist zumindest eine Aussparung für eine Libelle und Verstärkungseinlagen aus faserverstärktem Kunststoff auf, wobei diese zumindest bereichsweise stoffschlüssig mit dem Wasserwaagenkörper verbunden sind.

Die DE 44 01 944 A1 offenbart eine Wasserwaage mit einem Aluminium-Profilrohr, das zwischen den Außenwandungen von einer Innenwandung mittig durchsetzt ist, sodass sich zwei Kanäle im Profilrohr bilden. Durch die Innenwandung soll ein Mittel geschaffen werden, welches eine zusätzliche Versteifung des Hohlprofils für den Wasserwaagenkörper herbeiführen kann. Zur Aufnahme einer Libelle sind Aufnahme-Aussparungen in den Wandungen vorgesehen. Die Innenwandung kann alternativ auch unterbrochen sein, sodass sich zwei Innenstege, welche mit der jeweiligen Wandung ein T-Profil ausbilden, mit einer gemeinsamen Flucht und mit Abstand zueinander ergeben.

Die DE 77 04 713 U betrifft einen Wasserwaagenkörper mit einem Kunststoffprofil, der über die gesamte Länge des Wasserwaagenkörpers sich erstreckende Metalleinlagen aufweist. Das Kunststoffprofil weist Ausnehmungen auf, in welche die Metalleinlagen eingesetzt sind. Dabei können die Metalleinlagen in den Ausnehmungen des Kunststoffprofils festgeklebt sein.

Nachteilig am Stand der Technik ist, dass faserverstärkte Materialien teuer sind. Auch die Fertigung aus einem Wasserwaagenkörper mit verwindungssteifem oder gar mehrteiligem Grundprofil macht die Fertigung aufwendiger und/oder erhöht den notwendigen Materialaufwand. Aufgabe der Erfindung ist, den Stand der Technik zu verbessern und insbesondere die Materialkosten für eine verwindungssteife Wasserwaage zu verringern.

Zur Vermeidung dieser Nachteile wird das im Anspruch 1 angegebene Verfahren, der im Anspruch 10 angegebene Grundkörper und die im Anspruch 14 angegebene Wasserwaage bzw. das Richtscheit vorgeschlagen. Optionale, vorteilhafte Ausgestaltungen der Erfindung sind in den abhängigen Ansprüchen angegeben.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung, insbesondere im Zusammenhang mit den Figuren, zusätzlich. Wenn im nachfolgenden Anmeldungstext von "Umknicken" oder "Knickachse" gesprochen wird, schließt dies auch Vorgänge mit "Umbiegen" und "Umschlagen" um eine "Biegeachse" mit ein. Wird von "Grundkörper" oder "Wasserwaagenkörper" gesprochen, so betrifft dies nicht nur den fertig ausgebildeten Körper, sondern auch Zwischenstadien während des Herstellungsverfahrens. Nachfolgend wird zur besseren Verständlichkeit von einer Wasserwaage gesprochen, auch wenn dies ausdrücklich Richtscheite mit oder ohne Libelle einschließt.

Die Erfindung betrifft ein Verfahren zur Herstellung eines Grundkörpers, insbesondere eines Wasserwaagenkörpers für eine Wasserwaage oder ein Richtscheit aus einem Vierkantrohr, aufweisend folgende Schritte:
- Bereitstellen eines länglichen Vierkantrohres mit vier Seitenwandungen und zwei Stirnwandungen,
- Fertigen einer oder mehrerer Ausnehmungen in dem Vierkantrohr, vorzugsweise zur Aufnahme einer Libelle oder als Griffaussparung, wobei die eine oder die mehreren Ausnehmungen jeweils mindestens eine freie Kante aufweisen,
- Ausbilden mindestens eines Versteifungsabschnitts im Bereich der einen oder der mehreren Ausnehmungen und/oder im Bereich der einen oder beider Stirnseiten mit mindestens einer Doppelwandung, wobei die Doppelwandung durch Umbiegen und/oder Umknicken der mindestens einen freien Kante um eine Biege- und/oder Knickachse, insbesondere ins Innere des Vierkantrohrs, ausgebildet wird.

Vorzugsweise sind die Verfahrensschritte in der genannten Reihenfolge auszuführen. Das Vierkantrohr bildet den Ausgangskörper für die Fertigung des Wasserwaagenkörpers und ist typischerweise aus Metall oder Aluminium ausgebildet. Auch andere Werkstoffe mit entsprechenden Eigenschaften wie Kunststoff, karbonfaserverstärkter Kunststoff oder ein Bimetall können verwendet werden. Zusätzlich zu den vier Seitenwandungen sind zwei zunächst offene bzw. unverschlossene Stirnseiten vorhanden, sodass eine Stirnseite des Vierkantrohres vier freie Kanten bildet. Dabei ist jede der vier freien Kanten jeweils einer angrenzenden Seitenwandung zugeordnet. Nach Abschluss aller Verfahrensschritte, können die Stirnseiten zur Fertigung der Wasserwaage mit Stirnkappen verschlossen werden. Bspw. mittels Lasertechnik oder durch Fräsen können ferner Ausnehmungen in dem Vierkantrohr zur Aufnahme der Libelle oder für Griffausnehmungen gefertigt werden. Durch die Ausnehmung entstehen ebenfalls freie Kanten in dem Vierkantrohr. Freie Kante bedeutet bspw., dass keine andere oder weitere Seitenwandung angrenzt. Zwei aneinander angrenzende freie Kanten können eine konvexe Fläche des Vierkantrohrs einschließen. Der Versteifungsabschnitt wird ausgebildet, indem eine solche freie Kante um eine Knickachse umgebogen, umgeknickt und/oder umgeschlagen wird. Dadurch wird eine Doppelwandung gebildet, welche den Grundkörper zielgenau im Bereich der Ausnehmung oder der Stirnseiten verstärkt bzw. versteift. Damit ist es nicht mehr notwendig, den gesamten Grundkörper mit einem Innenprofil oder Außenprofil zu versehen, womit Material eingespart und auch das Gewicht der Wasserwaage verringert werden kann. Durch einen Versteifungsabschnitt im Bereich der Stirnseiten können Stirnkappen, die bislang vor allem auch zur Verbesserung der Verwindungssteifigkeit eingesetzt werden, entfallen.

In einer vorteilhaften Weiterbildung des erfindungsgemäßen Verfahrens geht dem Ausbilden des Versteifungsabschnitts ein Einschneiden von mindestens einer an die Ausnehmung und/oder die Stirnseite angrenzenden Seitenwandung, entlang mindestens einer Einschnittlinie, voran.

Ausgehend von einer freien Kante oder hin zu einer freien Kante wird eine an die Ausnehmung oder Stirnseite angrenzende Seitenwandungen eingeschnitten, sodass die daraus resultierende Einschnittlinie in die Ausnehmung oder in die Stirnseite mündet. Durch das Einschneiden werden zusätzlich ein oder zwei weitere freie Kanten gebildet. Damit können zwei aneinander angrenzende freie Kanten einen Abschnitt oder einen konvexen Eckbereich des Wasserwaagenkörpers einschließen. Dieser Eckbereich wird zusätzlich von der Knickachse begrenzt oder grenzt an diese an. Vorzugsweise wird der Eckbereich zur Ausbildung der Doppelwand um die Knickachse umgeknickt. Ein solcher Eckbereich oder Umschlagbereich kann an zwei, drei oder mehr freien Kanten angrenzen. Durch die Ausbildung von zusätzlichen freien Kanten durch Einschnittlinien kann das Umknicken um die Knickachse gezielt und mit wenig Kraftaufwand vorgenommen werden, ohne dass sich andere Bereiche des Grundkörper unerwünscht verformen.

In einer optionalen Weiterbildung des Verfahrens wird vor dem Ausbilden des Versteifungsabschnitts der Bereich der Biege- und/oder Knickachse erwärmt.

Durch die Erwärmung des Grundkörpers im Bereich der Knickachse wird das Umbiegen bzw. das Umknicken zur Ausbildung der Doppelwandung auch bei spröden Materialien ermöglicht oder zumindest erleichtert. Nach Ausbildung des Versteifungsabschnittes kann der Bereich wieder abgekühlt werden. Unerwünschte Verformungen des Grundkörpers durch die Erwärmung können durch mechanische Nachbearbeitung, bspw. Abschleifen korrigiert werden.

Zusätzlich kann die Doppelwandung beim Ausbilden des Versteifungsabschnitts mit einer Klebeverbindung zwischen einem umgebogenen und/oder umgeknickten Bereich der Seitenwandung und einer Innenwandung der Seitenwandung realisiert werden. Die Innenwandung der Seitenwandung ist die dem Zwischenraum des Grundkörpers zugewandte Wandung. Das Verkleben kann direkt oder mit einer zwischengeschalteten Einlage erfolgen. Zum Ausbilden der Klebeverbindung kann insbesondere bei Grundkörpern aus Kunststoff das Kunststoffmaterial selbst verwendet werden. Dabei wird das Kunststoffmaterial vor oder beim Umbiegen oder Umknicken erwärmt und erweicht. Diese Erweichung kann zum Ausbilden der Klebeverbindung genutzt werden.

Vorzugsweise wird die mindestens eine freie Kante beim Ausbilden des Versteifungsabschnitts zu einer, ein L-Profil, ein V-Profil oder ein U-Profil aufweisenden, Doppelwandung umgebogen und/oder umgeknickt.

Die vier Seitenwandungen des Grundkörpers schließen einen, vorzugsweise einzigen gemeinsamen, Zwischenraum ein. Prinzipiell kann die freie Kante nach außen zur Umgebung hin oder nach innen in den Zwischenraum hinein umgeknickt werden. Da möglichst alle Außenflächen des Grundkörpers zur Ausbildung von Messflächen perfekt eben sein sollten, sind die freien Kanten typischerweise nach innen umzuknicken. Die freie Kante kann bspw. nach innen umgeknickt werden, bis sie mit einer nicht umgeknickten Seitenwandung einen 90° Winkel für ein L-Profil einschließt, wobei der Ursprung dieses 90° Winkels auf oder im Bereich der Knickachse angeordnet ist. Alternativ kann die freie Kante weiter um bis zu 180° für ein U-Profil umgeknickt werden, bis eine an die freie Kante angrenzende Fläche satt flächig an der Innenfläche einer nicht umgeknickten Seitenwandung des Grundkörpers anliegt. Prinzipiell sind alle Winkel zwischen 0° und 180° möglich. Möglich ist damit auch ein V-Profil, bei dem der umgeknickte Bereich 155 und eine nicht umgeknickte Seitenwandung einen beliebigen Winkel zwischen 0 und 180° einschließen. Damit kann der bspw. Versteifungsbereich der Ausnehmung in Abhängigkeit der gewünschten Verbindungsteifigkeit bzw. bspw. dem benötigten Platz für die einzusetzende Libelle ausgestaltet werden.

In einer bevorzugten Ausführungsform wird ein Vierkantrohr mit einem rechteckigen Querschnitt mit zwei breiten Seitenwandungen und zwei schmalen Seitenwandungen bereitgestellt und die mindestens eine Ausnehmung wird zumindest teilweise innerhalb einer der schmalen Seitenwandungen gefertigt, wobei eine oder mehrere Einschnittlinien in einer oder beiden breiten Seitenwandungen, an die Ausnehmung angrenzend, ausgebildet werden.

Beim Ausbilden der Ausnehmung wird ein Bereich einer schmalen Seitenwandung ausgeschnitten, der sich vorzugsweise von einer ersten breiten Seitenwandung zu einer zweiten breiten Seitenwandung erstreckt. Beim Ausbilden der Ausnehmung kann jedoch weniger oder alternativ zusätzlich ein Bereich der angrenzenden breiten Seitenwandungen ausgeschnitten werden. Nach dem Einschneiden der breiten Seitenwandungen können diese in einer bereits beschriebenen Art und Weise umgeknickt werden. Durch das Umknicken der breiten Seitenwandungen kann der Versteifungsbereich gegenüber einem Umknicken von schmalen Seitenwandungen vergrößert werden.

Bevorzugt wird die Knickachse beim Ausbilden des Versteifungsabschnitts parallel zu einer Auflagefläche oder Messfläche Grundkörpers, insbesondere des Wasserwaagenkörpers, ausgebildet. Dies erleichtert die Fertigung des Versteifungsabschnitts, da der längliche Grundkörper beim Umknicken mit einem geeigneten Werkzeug um eine seiner Längsachsen bewegt oder rotiert werden kann, während der Bereich der umzuknickenden freien Kante ortsfest gehalten wird. Dadurch kann ein weniger aufwendiges Werkzeug verwendet werden. Alternativ kann auch der Grundkörper im Werkzeug ortsfest gehalten werden, während die umzuknickende freie Kante bewegt wird.

In einer optionalen, aber vorteilhaften Weiterbildung der Erfindung werden innerhalb des Versteifungsabschnitts zwei Doppelwandungen achsensymmetrisch bezüglich einer Mittelachse zeitgleich oder zeitlich aufeinanderfolgend ausgebildet. Die Mittelachse verläuft parallel zu einer Längsachse des Vierkantrohrs bzw. Grundkörpers oder fällt mit einer Symmetrieachse entlang der Längsrichtung des Grundkörpers zusammen.

Vorzugsweise wird der Versteifungsabschnitt, insbesondere die Doppelwandung(en), mit einem Stanzwerkzeug und/oder Kantwerkzeug ausgebildet. Die Versteifung des Grundkörpers und damit der gesamten Wasserwaage bzw. des Richtscheits wird also, anders als im Stand der Technik, durch eine mechanische Bearbeitung oder Nachbearbeitung eines Vierkantrohres, vorzugsweise eines eingeschnittenen Vierkantrohres, durch geeignete Werkzeuge realisiert. Das für das Verfahren bereitgestellte Vierkantrohr kann zusätzlich ein Profil aufweisen, muss es aber nicht. Teure Verbundmaterialien können ebenfalls entfallen.

Eigenständiger Erfindungsschutz wird für einen Grundkörper, insbesondere hergestellt nach einem der bereits beschriebenen Verfahren, mit vier Seitenwandungen und einer oder mehreren innerhalb der Seitenwandungen angeordneten Ausnehmungen, vorzugsweise zur Aufnahme mindestens einer Libelle, vorzugsweise einer Längslibelle, oder als Griffaussparung beansprucht. Dabei weist der Grundkörper im Bereich der Ausnehmung und/oder der Stirnseiten einen Versteifungsabschnitt mit mindestens einer umgebogenen und/oder umgeknickten Doppelwandung mit vorzugsweise L-förmigem oder U-förmigem Profil oder Querschnittprofil auf.

Die Ausnehmung zur Aufnahme der Libelle ist randständig am Grundkörperangeordnet. Durch das Umknicken einer Seitenwandung ist ein in den Zwischenraum ragender Vorsprung ausgebildet, wobei die Dicke, die Tiefe oder eine sonstige Abmessung des Vorsprungs einer Seitenwandstärke des Vierkantrohrs entspricht. Die Aufnahmeeinrichtung kann mit einer Klipsvorrichtung ausgebildet sein, sodass eine Klebeverbindung zwischen der Libelle und dem Wasserwaagenkörper entfallen kann. In der Aufnahmeeinrichtung kann bspw. eine untere Begrenzung für das Gehäuse z.B. durch nochmaliges Umklappen der Doppelwandung in den Zwischenraum des Grundkörpers hinein um eine weitere Knickachse ausgebildet werden, auf der das Gehäuse der Libelle oder die Libellenhalterung nach der Montage aufsitzt oder aufliegt. Ferner kann die Doppelwandung zusätzlich eine Verzahnung oder Ähnliches für Eingriff oder Kopplung mit dem Gehäuse der Libelle aufweisen, sodass eine Verschiebung in Längsrichtung des Grundkörpers und/oder ein unbeabsichtigtes Verrutschen unterbunden wird. Die umgeklappte Doppelwandung kann dementsprechend Prägungen, Bohrungen oder Aussparungen für den Eingriff oder die Verzahnung aufweisen. Diese können vorzugsweise vor dem Umknicken der Doppelwandung um die Knickachse vorgenommen werden. Mögliche Verformungen der Grundkörpers durch ein Erwärmen des Materials beim Herstellen können durch mechanische Nachbearbeitung, bspw. ein Abschleifen ausgeglichen werden.

In einer bevorzugten Ausführungsform des Grundkörpers ist die Doppelwandung als Aufnahmeeinrichtung zur formschlüssigen, insbesondere spielfreien, und/oder kraftschlüssigen Aufnahme der Libelle oder Längslibelle in der Ausnehmung ausgebildet. Zur Aufnahme der Längslibelle ist der Versteifungsabschnitt somit randständig und gegebenenfalls mittig bezüglich einer Längsachse des Grundkörpers angeordnet.

Vorzugsweise weist der Grundkörper, insbesondere in dem Bereich der Biege und/oder Knickachse, einen Kunststoff, insbesondere einen thermoplastischen Kunststoff, einen faserverstärkten Kunststoff oder ein Bimetall auf. Insbesondere bei karbonfaserverstäkten Kunststoffen ist ein Umbiegen oder Umknicken nach vorherigem Erwärmen besonders vorteilhaft umsetzbar.

In einer optionalen Weiterbildung des Grundkörpers ist im Bereich der Stirnseiten des Grundkörpers eine Abschlusskappe vollständig versenkt oder versenkbar.

Vor dem Einschneiden und/oder beim Einschneiden der Stirnseiten können auch an den Stirnseiten zusätzliche Ausnehmungen ausgebildet werden. Durch diese Ausnehmungen am Ende des Grundkörpers kann eine Abschlusskappe am Grundkörper aufgedrückt, angebracht oder versenkt werden, wobei die Abschlusskappe nicht über die Gesamtlänge des Grundkörpers, d.h. zum Beispiel nicht über die Stirnseiten, hinausragt. Ein Vierkantrohr mit einer Länge von 80 cm als Grundkörper kann damit bspw. eine 80 cm lange Wasserwaage ausbilden. Nach derzeitigem Stand der Technik werden die Abschlusskappen der Wasserwaagen einfach zusätzlich an den Stirnseiten des Wasserwagenkörpers aufgesteckt und ragen somit über das Ende des festen Grundkörperprofils hinaus. Durch Beanspruchung werden die Abschlusskappen be- und abgearbeitet und können auch verloren gehen. Ist eine Abschlusskappe entfernt oder gar verloren gegangen, verkürzt sich die Wasserwaage je nach Hersteller und verwendete Abschlusskappe um ca. 6-8 mm und kann gegebenenfalls die aufgetragene Maßeinteilung verfälschen. Durch die Ausbildung einer Ausnehmung im Bereich der Stirnseiten und das Einsetzen und Versenken der Abschlusskappen in dem Grundkörper kann die Maßeinteilung auf dem Grundkörper unabhängig von den Abschlusskappen oder Stirn kappen aufgebracht werden. Auch bei Verlust eine Abschlusskappe wäre die Maßeinteilung auf der Wasserwaage noch richtig, weil die Abschlusskappe bündig mit den Stirnseiten der Wasserwaage montiert worden ist. Die Abschlusskappe können aus Kunststoff oder Metall, insbesondere Aluminium ausgebildet sein.

Eigenständiger Erfindungsschutz wird ferner beansprucht für eine Wasserwaage oder ein Richtscheit, aufweisend einen Grundkörper, insbesondere einen Wasserwaagenkörper in einer der bereits beschriebenen Ausführungen, insbesondere hergestellt nach einem der bereits beschriebenen Verfahren, , wobei der Grundkörper mindestens einen Versteifungsabschnitt im Bereich einer Ausnehmung und/oder im Bereich einer Stirnseite mit mindestens einer umgebogenen und/oder umgeknickten Doppelwandung, mit vorzugsweise L-förmigem oder U-förmigem Profil oder Querschnittprofil, aufweist.

Weitere Einzelheiten, Merkmale und Wirkungen auf der Basis der Erfindung ergeben sich aus der nachfolgenden Beschreibung von Ausführungsbeispielen, sowie aus den Zeichnungen. Diese zeigen in:
Figur 1a eine Seitenansicht eines beispielhaften Vierkantrohrs aus dem Stand der Technik;
Figur 1b eine Seitenansicht eines beispielhaften Wasserwaagenkörpers aus dem Stand der Technik;
Figur 1c eine Draufsicht eines beispielhaften Wasserwaagenkörpers aus dem Stand der Technik;
Figur 2 eine Seitenansicht eines Verfahrensschritts in einer beispielhaften Ausführungsform der Erfindung;
Figur 3 eine Draufsicht eines Wasserwaagenkörpers in einer beispielhaften Ausführungsform der Erfindung;
Figur 4 eine Prinzipskizze einer geschnittenen Ansicht eines Wasserwaagenkörpers in einer beispielhaften Ausführungsform der Erfindung.

In den unterschiedlichen Figuren sind gleiche oder funktionsgleiche Teile stets mit denselben Bezugszeichen versehen, weswegen diese in der Regel auch nur einmal beschrieben werden. Das konkrete Ausführungsbeispiel zeigt einen Wasserwaagenkörper zur Aufnahme einer einzigen Längslibelle. Jedoch sind auch Wasserwaagenkörper zur Aufnahme mehrerer Libellen und/oder Längslibellen, die teilweise oder alle mit einem erfindungsgemäßen Versteifungsabschnitt versehen sind, ausdrücklich vom Schutzbereich der Anmeldung erfasst. Gleiches gilt für Grundkörper für Richtscheite mit oder ohne Libellen.

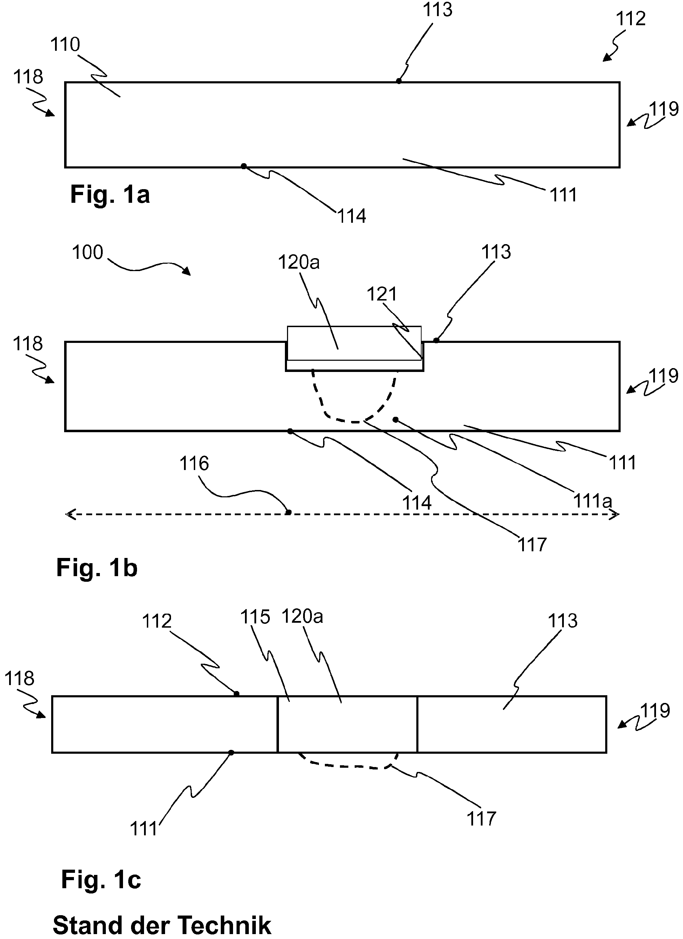

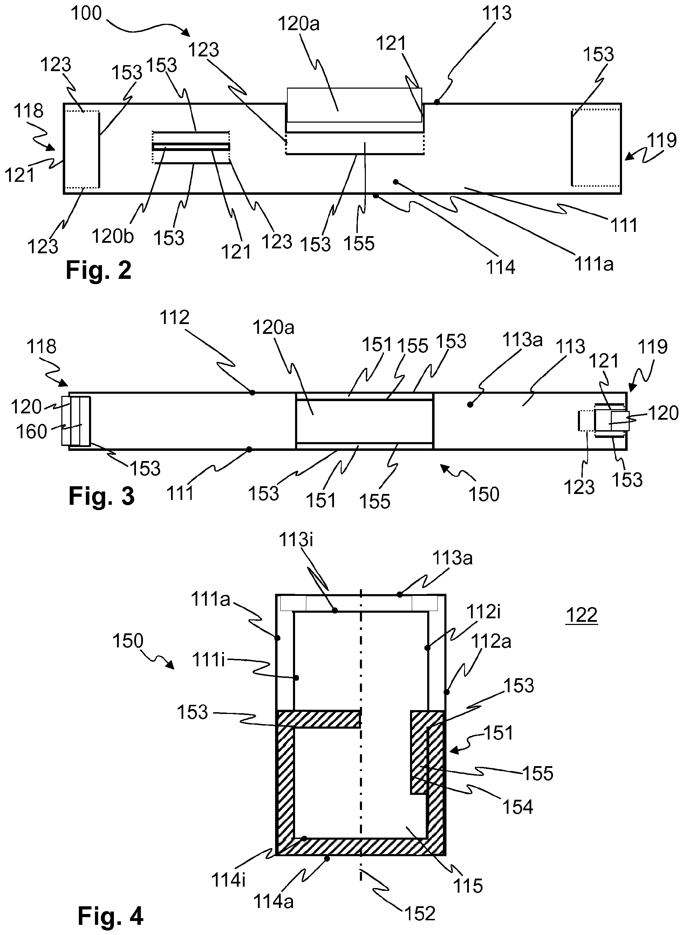

Figur 1a zeigt ein Vierkantrohr 110, welches sowohl das Ausgangsmaterial für einen Wasserwaagenkörper 100 (vgl. Figuren 1b und 1c) aus dem Stand der Technik, als auch das Ausgangsmaterial für einen erfindungsgemäßen Wasserwaagenkörper 100 (vgl. Fig. 3 und 4) darstellen kann. Das Vierkantrohr 110 ist länglich ausgebildet und weist vier Seitenwandungen 111, 112, 113, 114 und zwei Stirnseiten 118, 119 auf, wobei bedingt durch den rechteckigen Querschnitt des Vierkantrohrs 110 zwei breite Seitenwandungen 111 und 112 (112 verdeckt) und zwei schmale Seitenwandungen 113 und 114 ausgebildet sind. Die Stirnseiten 118, 119 begrenzen die Längsachse 116 des länglichen Wasserwaagenkörpers 100 und entsprechen meist den Schnittflächen des Vierkantrohres 110, wenn es aus Stangenware auf die Länge des Wasserwaagenkörpers, bspw. 80 cm zugeschnitten wird. Das Vierkantrohr 110 kann ferner an den Außenflächen 111a, 112a, 113a, 114a oder Innenflächen 111a, 112i, 113i, 114i (vgl. Fig. 4) profiliert oder glatt ausgebildet sein.

Figur 1b zeigt einen Wasserwaagenkörper 100 aus dem Stand der Technik nach dem Bereitstellen eines Vierkantrohrs 110 (vgl. Figur 1a) und nach dem Fertigen einer Ausnehmung 120a zur Aufnahme einer Libelle, wobei die Ausnehmung 120a mehrere freie Kanten 121 aufweist. Die Ausnehmung 120a zur Aufnahme der Libelle ist randständig als Längslibelle am Wasserwaagenkörper 100 angeordnet und als Ausschnitt in zumindest einer schmalen Seitenwandung 113 vorgenommen. Beim Ausschneiden der Ausnehmung 120a kann jedoch weniger oder alternativ, wie dargestellt, zusätzlich ein Bereich der angrenzenden breiten Seitenwandungen 111, 112 mit ausgeschnitten werden. Außerdem ist die Ausnehmung 120a für die Libelle mittig bezüglich einer Längsachse 116 des Wasserwaagenkörpers 100 angeordnet. Die dargestellte Ausnehmung 120a ist somit von insgesamt acht freien Kanten 121 begrenzt, wobei jeweils drei freie Kanten 121 die dem Betrachter gezeigte breite Seitenwandung 111 und drei freie Kanten 121 die dem Betrachter verdeckte breite Seitenwandung 112 abschließen. Zwei weitere freie Kanten 121 schließen die Ausnehmung 120a an der für die Libelle ausgeschnittenen schmalen Seitenwandung 113 ein. Durch die Ausnehmung 120a ist der Wasserwaagenkörper 100 im Bereich der Ausnehmung 120a geschwächt und anfällig für Beschädigung oder Verwindung 117.

Figur 1c zeigt eine Draufsicht eines Wasserwaagenkörpers 100 mit einer Verwindung 117 (schematisch angedeutet). Die Draufsicht ermöglicht den Blick durch die Ausnehmung 120a in den Zwischenraum 115, der von den vier Seitenwandungen 111, 112, 113, 114 umgeben ist. Die Verwindung 117 entsteht bspw. durch eine unsachgemäße, vorzugsweise mittige, Belastung einer der vier Seitenwandungen 111, 112, 113, 114, wobei dadurch die Messflächen des Wasserwaagenkörpers 100 unbrauchbar werden. Um dem entgegenzuwirken ist ein Versteifungsabschnitt 150 (vgl. Figuren 2, 3 und 4) vorgesehen.

Figur 2 zeigt das Einschneiden des Wasserwaagenkörpers 100 entlang einer Einschnittlinie 123, ausgehend von einem Wasserwaagenkörper 100 wie in Figur 1b, wobei die genauen Geometrien natürlich an den zu fertigenden Versteifungsabschnitt 150 (vgl. Figuren 2 und 3) anzupassen sind. Gemäß Ausführungsbespiel werden Versteifungsabschnitte 150 bei der Ausnehmung 120a zur Aufnahme der Libelle, der Ausnehmung 120b zur Ausbildung der Griffaussparung und jeweils an beiden Stirnseiten 118, 119 des Wasserwaagenkörpers 100 ausgebildet. Die Ausbildung eines Versteifungsabschnitts 150 wird nachfolgend für die Ausnehmung 120a zur Aufnahme der Libelle genauer erläutert. Ausgehend von einer freien Kante 121 an der Ausnehmung 120a oder hin zu einer freien Kante 121 wird die an die Ausnehmung 120a angrenzende breite Seitenwandung 111 eingeschnitten. Das Gleiche wird zeitgleich oder zeitlich aufeinanderfolgend an der zweiten nicht gezeigten breiten Seitenwandung 112 vorgenommen. Durch das Einschneiden entsteht abhängig von deren Anordnung für jede Einschnittlinie 123 wenigstens eine zusätzliche freie Kante 121. Insgesamt drei freie Kanten 121 an der eingeschnittenen breiten Seitenwandung 111, wovon zwei durch die Einschnittlinien 123 entstanden sind, schließen zusammen mit einer Knickachse 153 einen viereckigen oder rechteckigen Bereich ein, der den umgeknickten Bereich 155 (vgl. Figur 4) ausbilden wird. Die Knickachse 153 verläuft parallel zu einer Längsachse 116 (vgl. Figur 1b) des Wasserwaagenkörpers 100. Durch die Ausbildung von insgesamt drei freien Kanten 121 durch Einschnittlinien 123 kann das Umknicken um die Knickachse 153 gezielt und mit wenig Kraftaufwand vorgenommen werden, ohne dass sich der Wasserwaagenkörper 100 außerhalb des viereckigen oder rechteckigen Bereichs unerwünscht verformt. In gleicher Weise kann ein Versteifungsabschnitt 150 für eine Griffaussparung und an den Stirnseiten 118, 119 des Wasserwaagenkörpers 100 gefertigt werden. Die Ausnehmung 120b zur Ausbildung der Griffaussparung ist zur Anschaulichkeit größer dargestellt, als notwendig. Die Ausnehmung 120b zur Ausbildung der Griffaussparung kann mindestens zwei freie Kanten 121 aufweisen und durch eine einfache Einschnittlinie 123 ausgebildet werden. Die Einschnittlinien 123 an den Stirnseiten 118, 119 fallen vorzugsweise mit den Kanten zwischen den zwei angrenzenden Seitenwandungen 111, 112, 113, 114 zusammen. Fallen die Einschnittlinien 123 an den Stirnseiten 118, 119 nicht mit den Kanten zwischen den zwei angrenzenden Seitenwandungen 111, 112, 113, 114 zusammen, können sich zusätzliche Ausnehmungen 120 (vgl. Figur 3) ausbilden, in welche Stirnkappen oder Abschlusskappen (nicht dargestellt) bündig zum Abschluss mit dem nicht umgeknickten Bereich an den Stirnseiten 118, 119 versenkt werden können.. Knickachsen 153 verlaufen allgemein meist parallel zu der umzuknickenden freien Kante 121.

Figur 3 zeigt den fertig ausgebildeten Versteifungsabschnitt 150, der ausgehend vor der Ausnehmung 120a zur Aufnahme der Libelle gefertigt worden ist und bei dem der viereckige oder rechteckige Bereich zu einer U-förmigen Doppelwand 151 durch Umknicken um die Knickachse 153 mit dem maximal möglichen Knickwinkel von 180° geformt ist. Dadurch, dass die Knickachse 153 der Ausnehmung 120a parallel zu einer Längsachse 116 (vgl. Figur 1b) des Wasserwaagenkörpers 100 verläuft, kann beim Umknicken der Wasserwaagenkörper 100 um seine Längsachse 116 rotiert werden. Dies erleichtert die Fertigung des Versteifungsabschnitts 150, da der längliche Wasserwaagenkörper 100 beim Umknicken mit einem vergleichsweise einfachen Werkzeug gedreht werden kann, während der Bereich 155 der umzuknickenden freien Kante 121 ortsfest gehalten wird. Alternativ kann auch der Wasserwaagenkörper 100 im Werkzeug ortsfest gehalten werden, während die umzuknickende freie Kante 121 bewegt wird. Damit kann ohne großen Materialaufwand eine Profilierung eines ggf. zunächst glattwandigen Vierkantrohrs 110 (vgl. 1a) im Bereich der materialgeschwächten Ausnehmung 120 erreicht werden. Die durch diese mechanische Nachbearbeitung erzielte Profilierung wird wie folgt genauer beschrieben.

Ferner zeigt Figur 3 eine Ausführungsform eines Wasserwagenkörpers 100, bei der die Stirnseiten 118, 119 mit einer Ausnehmung 120 und somit an ihr Stirnseite 118, 119 mit einer oder mehreren freien Kanten 121 versehen werden. An einer Stirnseite 119 können bspw. jeweils drei freie Kanten 121 gebildet werden, wobei eine der Knickachse 153 im Wesentlichen parallel zur Stirnseite 119 und zwei weitere Knickachsen 153 jeweils im Wesentlichen parallel zu der ersten breiten Seitenwandung 111 und der zweiten breiten Seitenwandung 112 verlaufen. Innerhalb der Ausnehmung 120 werden ein oder mehrere freie Kanten 121 mit Einschnittlinien 123 versehen, sodass je nach Anzahl der eingeschnittenen freien Kanten 121 Versteifungsabschnitte 150 bzw. Doppelwandungen 151 ausbildbar sind. Durch die Ausnehmungen 120 im Bereich der Stirnseiten 118, 119 kann eine Abschlusskappe oder Stirnkappe 160 am Wasserwagenkörper 100 aufgedrückt, angebracht oder versenkt werden, die nicht über die Gesamtlänge des Wasserwagenkörpers 100 (bzw. des Grundkörpers 100 im Falle eines Richtscheits) hinausragt, sondern bündig mit dem fertigen Wasserwagenkörper 100 abschließt.

Figur 4 zeigt eine schematische Prinzipskizze einer Schnittdarstellung, wobei die Schnittebene senkrecht zur Längsachse 116 (vgl. Figur 1b) des Wasserwaagenkörpers 100 im Bereich des Versteifungsabschnitts 150 verläuft. Vom Betrachter aus links angeordnet ist eine erste breite Seitenwandung 111 zu einer Doppelwandung 151 mit L-Profil um eine erste Knickachse 153 umgeknickt. Das heißt, der umgeknickte Bereich 155 und die Seitenwandung 111 schließen einen rechten Winkel ein. Vom Betrachter aus rechts angeordnet ist eine zweite breite Seitenwandung 112 zu einer Doppelwandung 151 mit U-Profil um eine zweite Knickachse 153 umgeknickt. Das heißt, der umgeknickte Bereich 155 und die Seitenwandung 112 verlaufen parallel zueinander. Nicht dargestellt ist eine Doppelwandung 151 mit einem V-Profil, wobei der umgeknickte Bereich 155 und eine Seitenwandung 111,112 einen Winkel zwischen 0 und 180° einschließen. Beide umgeknickten Bereiche 155 der breiten Seitenwandungen 111, 112 können auch auf die gleiche Art und Weise oder in dem gleichen Winkel umgeknickt sein. Die Mittelachse 152 des Querschnitts ist in diesem Fall als Symmetrieachse ausgebildet. Die Mittelachse 152 verläuft senkrecht zu einer Längsachse 116 des Vierkantrohrs 110 bzw. Wasserwaagenkörpers 100. In anderen Worten: Die freie Kante 121 kann bspw. nach innen in den Zwischenraum 115 umgeknickt werden, bis sie mit einer nicht umgeknickten breiten Seitenwandung 111 einen 90° Winkel für ein L-Profil einschließt, wobei der Ursprung dieses 90° Winkels auf oder im Bereich der Knickachse 153 angeordnet ist. Alternativ kann die freie Kante 121 weiter um bis zu 180° für ein U-Profil umgeknickt werden, bis eine an die freie Kante 121 angrenzende Fläche satt flächig an der Innenfläche 112i einer nicht umgeknickten breiten Seitenwandung 112 des Wasserwaagenkörpers 100 anliegt. Bei einem U-Profil kann der umgeknickte Bereich 155 mit der Innenwandung 112i der Seitenwandung 112 verklebt werden. Prinzipiell sind alle Winkel zwischen 0° und 180° möglich. Der Zwischenraum 115 im Wasserwaagenkörper 100 ist von den vier Innenwandungen 111i, 112i, 113i, 114i der Seitenwandungen 111, 112, 113, 114 des Vierkantrohrs 110 (vgl. Figur 1a) umgeben. Nach außen zur Umgebung 122 zeigen vier Außenwandungen 111a, 112a, 113a, 114a der Seitenwandungen 111, 112, 113, 114 des Vierkantrohrs 110 (vgl. Figur 1a), welche Messflächen für die fertige Wasserwaage ausgebildet werden können. Durch das Umknicken einer Seitenwandung 111, 112 ist ein in den Zwischenraum 115 ragender Vorsprung ausgebildet, wobei die Dicke, die Tiefe oder eine sonstige Abmessung des Vorsprungs einer Seitenwandstärke des Vierkantrohrs 110 (vgl. Figur 1a) entspricht. Dieser Vorsprung kann bspw. eine Aufnahmeeinrichtung 154 zur Aufnahme einer Libelle aufweisen. Durch diese Profilierung entsteht der Versteifungsabschnitt 150, der, ohne zusätzlichen Materialeinsatz, die Wasserwaage in ihrem schwächsten Bereich zusätzlich verstärkt. Vielmehr entsteht der Versteifungsabschnitt 150 durch mechanische Nachbearbeitung.

### Bezugszeichenliste:

- 100: Grundkörper, insbesondere Wasserwaagenkörper
- 110: Vierkantrohr
- 111: Erste breite Seitenwandung
- 112: Zweite breite Seitenwandung
- 113: Erste schmale Seitenwandung
- 114: Zweite schmale Seitenwandung
- 111a-114a: Außenwandungen/Außenflächen
- 111i-114i: Innenwandungen/Innenflächen
- 115: Zwischenraum
- 116: Längsachse
- 117: Verwindung
- 118: Erste Stirnseite
- 119: Zweite Stirnseite
- 120: Ausnehmung
- 120a: Ausnehmung zur Aufnahme einer Libelle
- 120b: Ausnehmung für Griffaussparung
- 121: Freie Kante
- 122: Umgebung
- 123: Einschnittlinie
- 150: Versteifungsabschnitt
- 151: Doppelwandung
- 152: Mittelachse
- 153: Knickachse
- 154: Aufnahmeeinrichtung
- 155: Umgeknickter Bereich
- 160: Endkappe, Stirnkappe
- A-A: Schnittlinie

## Patentansprüche

1. Verfahren zur Herstellung eines Grundkörpers, insbesondere eines Wasserwaagenkörpers (100), für eine Wasserwaage oder ein Richtscheit aus einem Vierkantrohr (110), aufweisend folgende Schritte:
- Bereitstellen eines länglichen Vierkantrohrs (110) mit vier Seitenwandungen (111, 112, 113, 114) und zwei Stirnseiten (118, 119),
- Fertigen einer oder mehrerer Ausnehmungen (120, 120a, 120b) in dem Vierkantrohr (110), wobei die eine oder die mehreren Ausnehmungen (120a, 120b) jeweils mindestens eine freie Kante (121) aufweisen,
- Ausbilden mindestens eines Versteifungsabschnitts (150) im Bereich der einen oder der mehreren Ausnehmungen (120, 120a, 120b) und/oder im Bereich der einen oder beider Stirnseiten (118, 119) mit mindestens einer Doppelwandung (151), wobei die Doppelwandung (151) durch Umbiegen und/oder Umknicken der mindestens einen freien Kante (121) um eine Biege- und/oder Knickachse (153), insbesondere ins Innere des Vierkantrohrs (110), ausgebildet wird.

2. Verfahren nach Anspruch 1, **dadurch gekennzeichnet, dass** dem Ausbilden des Versteifungsabschnitts (150) ein Einschneiden von mindestens einer an die Ausnehmung (120, 120a, 120b) und/oder die Stirnseite (118, 119) angrenzenden Seitenwandung (111, 112), entlang mindestens einer Einschnittlinie (123), vorangeht.

3. Verfahren nach Anspruch 1 oder 2, **dadurch gekennzeichnet, dass** die mindestens eine freie Kante (121) beim Ausbilden des Versteifungsabschnitts (150) zu einer, ein L-Profil, ein V-Profil oder ein U-Profil aufweisenden, Doppelwandung (151) umgebogen und/oder umgeknickt wird.

4. Verfahren nach einem der vorangehenden Ansprüche, **dadurch gekennzeichnet, dass** vor dem Ausbilden des Versteifungsabschnitts (150) der Bereich der Biege- und/oder Knickachse (153) erwärmt wird.

5. Verfahren nach einem der vorangehenden Ansprüche, **dadurch gekennzeichnet, dass** beim Ausbilden des Versteifungsabschnitts (150) die Doppelwandung (151) mit einer Klebeverbindung zwischen einem umgebogenen und/oder umgeknickten Bereich (155) der Seitenwandung (111, 112, 113, 114) und einer Innenwandung (111i, 112i, 113i, 114i) der Seitenwandung (111, 112, 113, 114) realisiert wird.

6. Verfahren nach einem der vorangehenden Ansprüche, **dadurch gekennzeichnet, dass** ein Vierkantrohr (110) mit einem rechteckigen Querschnitt mit zwei breiten Seitenwandungen (111, 112) und zwei schmalen Seitenwandungen (113, 114) bereitgestellt wird und die mindestens eine Ausnehmung (120, 120a) zumindest teilweise innerhalb der schmalen Seitenwandung (113, 114) gefertigt wird, wobei eine oder mehrere Einschnittlinien (123) in einer oder beiden breiten Seitenwandungen (111, 112), an die Ausnehmung (120a) angrenzend, ausgebildet werden.

7. Verfahren nach einem der vorangehenden Ansprüche, **dadurch gekennzeichnet, dass** beim Ausbilden des Versteifungsabschnitts (150) die Knickachse (153) parallel zu einer Auflagefläche oder Messfläche des Grundkörpers (100) und/oder parallel zu einer freien Kante (121) ausgebildet wird.

8. Verfahren nach einem der vorangehenden Ansprüche, **dadurch gekennzeichnet, dass** innerhalb des Versteifungsabschnitts (150) zwei Doppelwandungen (151) achsensymmetrisch bezüglich einer Mittelachse (152) zeitgleich oder zeitlich aufeinanderfolgend ausgebildet werden.

9. Verfahren nach einem der vorangehenden Ansprüche, **dadurch gekennzeichnet, dass** der Versteifungsabschnitt (150), insbesondere die Doppelwandung(en) (151), mit einem Stanzwerkzeug und/oder Kantwerkzeug ausgebildet wird.

10. Grundkörper (100) für eine Wasserwaage oder ein Richtscheit, insbesondere hergestellt nach einem Verfahren nach einem der Ansprüche 1-9, mit vier Seitenwandungen (111, 112, 113, 114) und zwei Stirnseiten (118, 119) und einer oder mehreren innerhalb der Seitenwandungen (111, 112, 113, 114) angeordneten Ausnehmungen (120, 120a, 120b),
**dadurch gekennzeichnet, dass**
der Grundkörper (100) im Bereich der Ausnehmung (120, 120a, 120b) und/oder der Stirnseiten (118, 119) einen Versteifungsabschnitt (150) mit mindestens einer umgebogenen und/oder umgeknickten Doppelwandung (151), mit vorzugsweise L-förmigem, V-förmigem oder U-förmigem Profil, aufweist.

11. Grundkörper (100) nach Anspruch 10, **dadurch gekennzeichnet, dass** die Doppelwandung(en) (151) des Versteifungsabschnitts (150) als Aufnahmeeinrichtung (154) zur formschlüssigen und/oder kraftschlüssigen Aufnahme der Libelle in der Ausnehmung (120a) ausgebildet sind.

12. Grundkörper (100) nach Anspruch 10 oder 11, **dadurch gekennzeichnet, dass** der Grundkörper (100) einen Kunststoff, insbesondere einen faserverstärkten Kunststoff, aufweist.

13. Grundkörper (100) nach einem der Ansprüche 10-12, **dadurch gekennzeichnet, dass** im Bereich der Stirnseiten (118, 119) des Grundkörpers (100) eine Abschlusskappe (160) vollständig versenkt oder versenkbar ist.

14. Wasserwaage oder Richtscheit, aufweisend einen Grundkörper (100), insbesondere einen Wasserwaagenkörper (100) nach einem der Ansprüche 10-13, insbesondere hergestellt nach einem Verfahren nach einem der Ansprüche 1-9, mit vier Seitenwandungen (111, 112, 113, 114), zwei Stirnseiten (118, 119) und einer oder mehreren innerhalb der Seitenwandungen (111, 112, 113, 114) angeordneten Ausnehmungen (120, 120a, 120b),
**dadurch gekennzeichnet, dass**
der Grundkörper (100) mindestens einen Versteifungsabschnitt (150) im Bereich der Ausnehmung (120, 120a, 120b) und/oder der Stirnseiten (118, 119) mit mindestens einer umgebogenen und/oder umgeknickten Doppelwandung (151), mit vorzugsweise L-förmigem, V-förmigem oder U-förmigem Profil, aufweist.
